# EUROPEAN PATENT APPLICATION

(11) **EP 3 722 363 A1**
(43) Date of publication of application: **14.10.2020**
(21) Application number: 19169026.2
(22) Date of filing: 12.04.2019
(51) Int. Cl.: C08L 23/12, C08F 2/00

(54) **IMPACT COPOLYMER POLYPROPYLENE FOR THIN-WALL INJECTION PACKAGING**

(71) Applicant: Thai Polyethylene Co., Ltd., 10800 Bangkok (TH)
(72) Inventor: TANPHIBAL, Pimsai, 10800 Bangkok (TH); CHEEVASRIRUNGRUANG, Watcharee, 10800 Bangkok (TH); PHIRIYAWIRUT, Phairat, 10800 Bangkok (TH)
(74) Representative: Gordon, Kirsteen Helen

(57) **Abstract**

The present invention relates to an impact copolymer polypropylene composition comprising a propylene homopolymer or copolymer matrix and an ethylene propylene rubber phase dispersed in the matrix, wherein the ethylene propylene rubber phase (PER) is present in an amount of 10-18 wt%, based on the total weight of propylene homopolymer or copolymer matrix and ethylene propylene rubber phase and the amount of ethylene in the PER (PER-C2) phase is 50-56 mol%, a process for preparing the composition, use of the composition in injection molding and articles comprising the composition.

## Description

### FIELD OF THE INVENTION

The present invention relates to an impact copolymer polypropylene composition for preparation of packaging by injection molding, a process for preparing the composition and to use of the composition in injection molding, e.g. thin-wall injection molding. The invention also relates to a method of injection molding, e.g. thin-wall injection molding, wherein the composition is injected, and to articles comprising the impact copolymer polypropylene composition.

### BACKGROUND OF THE INVENTION

Thin-wall injection molding is a key technology for making food packaging due to economic and environmental concerns. Thin-wall injection molding requires high melt flow polymer to achieve the necessary processability and high flexibility required for innovative packaging designs.

Polypropylene is one polymer widely used in injection molding of thin-wall articles, and especially food packaging. However, due to its brittleness, it is a challenge to maximize the impact and stiffness strength of the thin-wall injection molded articles. This problem is exacerbated at low temperatures and it is especially difficult to obtain thin wall injection molded articles with desirable mechanical properties at low temperatures e.g. -40°C, the temperature used for shock freezing of frozen food.

US6156836A discloses polypropylene resin compositions which have an improved balance of physical properties in comparison to similar polypropylene materials as well as thin-wall moldability. The polypropylene resin composition comprises: (A) 54 to 65% by weight of a crystalline ethylene-propylene block copolymer having a MFR from 60 to 120 g/10 minutes, wherein the crystalline ethylene-propylene block copolymer comprises a homopolypropylene moiety and an ethylene-propylene copolymer moiety, wherein the homopolypropylene moiety has an isotactic pentad fraction value of 96% or more and an MFR value from 150 to 250 g/10 minutes and the ratio of the ethylene-propylene copolymer moiety is from 5 to 10% by weight based on the total of the homopolypropylene moiety and the ethylene-propylene copolymer moiety; (B) 17 to 24% by weight of a thermoplastic elastomer comprising at least one styrene-ethylene butylene-styrene block copolymer; and (C) 15 to 25% by weight of talc.

EP2174980A1 discloses heterophasic polypropylene resin having a MFR of more than 40 g/10 minutes comprising a propylene homo- or copolymer matrix and an ethylene-propylene rubber phase dispersed within the matrix, wherein the heterophasic polypropylene resin has a fraction insoluble in p-xylene at 25°C (XCU) with an intrinsic viscosity of 1.2 dl/g or less, the XCU being composed of propylene monomer units in an amount of at least 95 wt%, and a fraction soluble in p-xylene at 25°C (XCS), having an intrinsic viscosity of 2.0 to 3.5 dl/g and being composed of propylene monomer units in an amount of 50 wt% or more, and having a glass transition temperature T_{g} in the range of -42 to -30°C.

US8445598B2 discloses heterophasic polypropylene resin comprising a propylene homo- or copolymer matrix and an ethylene-propylene rubber phase dispersed within the matrix wherein the heterophasic polypropylene resin has a fraction insoluble in p-xylene at 25°C (XCU) with an intrinsic viscosity of 1.5 dl/g or less, and an amount of propylene monomer units of at least 95 mol%, and a fraction soluble in p-xylene at 25°C (XCS) with an intrinsic viscosity of 1.5 to 3.0 dl/g, and an amount of propylene monomer units of 50 to 75 mol%, and a molecular weight distribution of 2.5 to 3.5, and MFR more than 100 g/10 min, the XCU fraction is present in an amount of 70 to 90 wt% of the heterophasic polypropylene resin and the XCS fraction is present in an amount of 10 to 30 wt% of the heterophasic polypropylene resin.

### SUMMARY OF INVENTION

Viewed from a first aspect the present invention provides an impact copolymer polypropylene composition comprising a propylene homopolymer or copolymer matrix and an ethylene propylene rubber phase dispersed in the matrix, wherein the ethylene propylene rubber phase (PER) is present in an amount of 10-18 wt%, based on the total weight of the propylene homopolymer or copolymer matrix and the ethylene propylene rubber phase, and the amount of ethylene in the ethylene propylene rubber (PER-C2) phase is 50-56 mol%.

Viewed from a further aspect the present invention provides a process for preparing an impact copolymer polypropylene composition as hereinbefore described, comprising:
(i) polymerising propylene and optionally an olefin comonomer to obtain the propylene homopolymer or copolymer matrix; and
(ii) polymerising propylene and ethylene in the presence of the propylene homopolymer or copolymer matrix to obtain the ethylene propylene rubber phase dispersed in the propylene homopolymer or copolymer matrix.

Viewed from a further aspect the present invention provides a preferred process for preparing an impact copolymer polypropylene composition as hereinbefore described, wherein the process comprises:
(i) homopolymerising propylene using a Ziegler-Natta catalyst, alkyl aluminium as a co-catalyst, and an amino alkoxysilane compound of formula (I) as a first external electron donor

   [R¹R²N(R³)ₐ]ₓSi(OR⁴)₄₋ₓ (I)

   wherein x is 1 or 2, a is 0 or 1, R¹ and R² are independently C₁-C₅ aliphatic hydrocarbyl or C₃-C₆ cyclic hydrocarbyl, R³ is C₁-C₃ alkylene and R⁴ is C₁-C₂ aliphatic hydrocarbyl;
(ii) copolymerising propylene and ethylene, in the presence of the polymer mixture obtained from step (i), using a Ziegler-Natta catalyst, alkyl aluminium as a co-catalyst, and a dialkoxy silane compound of formula (II) as a second external electron donor

   R⁵R⁶Si(OR⁷)₂ (II)

   wherein R⁵ and R⁶ are independently C₁₋₆ aliphatic hydrocarbyl or C₃-₆ cyclic hydrocarbyl, optionally containing 1 or 2 heteroatoms; and each R⁷ is independently C₁-C₄ aliphatic hydrocarbyl.

Viewed from a further aspect the present invention provides an impact copolymer polypropylene composition obtainable by the processes herein described.

Viewed from a further aspect the present invention provides the use of the impact copolymer polypropylene composition herein described in injection molding, preferably thin-wall injection molding.

Viewed from a further aspect the present invention provides a method of injection molding, e.g. thin-wall injection molding, comprising injecting a molten impact copolymer polypropylene composition as herein described into a mold; solidifying the impact copolymer polypropylene in the mold and ejecting from the mold a molded impact copolymer polypropylene article.

Viewed from a further aspect the present invention provides a molded article (e.g. packaging) comprising the impact copolymer polypropylene composition herein described.

### DEFINTIONS

As used herein the term "hydrocarbyl" refers to a univalent radical derived from a hydrocarbon. Examples include alkyl groups. As used herein the term "aliphatic" is used to refer to non-cyclic groups. Aliphatic groups may be straight-chained (sometimes referred to as linear) or branched.

As used herein the term "impact copolymer polypropylene (ICP) composition" refers to a polymer comprising a propylene homopolymer or copolymer matrix and an ethylene propylene rubber phase (PER) dispersed in the matrix. Optionally the composition further comprises additives, e.g. antioxidants and/or stabilizers.

As used herein the term "propylene homopolymer" refers to a polymer which consists essentially of repeat units deriving from propylene. Propylene homopolymer may, for example, comprise at least 99 %, more preferably at least 99.5 %, still more preferably at least 99.95 %, and yet more preferably at least 99.95%, e.g. 100%, by weight of repeat units deriving from propylene.

As used herein the term "propylene copolymer" refers to a polymer comprising repeat units deriving from propylene and at least one other comonomer. Typically, propylene copolymer comprises at least 0.05%, more preferably at least 0.1 % and still more preferably at least 0.4 wt% of a repeat unit deriving from at least one other comonomer. Propylene copolymer will normally not comprise more than 15 wt% of repeat units deriving from at least one other comonomer.

As used herein the term PER-C2 refers to the mol% of repeat units deriving from ethylene (C2) in the ethylene propylene rubber phase, based on the total amount of repeat units present therein.

As used herein the term "PE homopolymer" refers to the mol% of block polyethylene present in the ethylene propylene rubber phase, based on the total weight of the rubber phase.

As used herein the term "Ziegler Natta (ZN)" catalyst refers to a catalyst that comprises a transition metal halide (e.g. titanium halide, chromium halide, hafnium halide, zirconium halide or vanadium halide) supported on a metal or metalloid compound (e.g. a magnesium compound or a silica compound).

As used herein the term "catalyst system" refers to the catalyst and optional activators, electron donors and modifiers.

As used herein, the term "multistage process" refers to a process which is carried out in two or more stages.

Unless the context requires otherwise, throughout the specification and claims that follow, the word "comprise" and variations thereof, such as "comprises" and "comprising" are to be construed in an open, inclusive sense, that is, as "including, but not limited to".

### DETAILED DESCRIPTION

The present invention provides an impact copolymer polypropylene composition comprising a propylene homopolymer or copolymer matrix and an ethylene propylene rubber (PER) phase dispersed in the matrix, wherein the ethylene propylene rubber phase is present in an amount of 10-18 wt%, based on the total weight of propylene homopolymer or copolymer matrix and ethylene propylene rubber phase, and the amount of ethylene in the ethylene propylene rubber (PER-C2) phase is 50-56 mol%. The impact copolymer polypropylene composition of the present invention possesses an ideal balance of properties for use in injection molding and particularly thin-wall injection molding, e.g. of packaging. Specifically the composition has a relatively high MFR₂ which facilitates injection into, and flow in, the mold, a relatively high flexural modulus as well as high notched Izod impact strength, even at low temperature, and a low Tg.

The impact copolymer polypropylene composition may comprise a propylene homopolymer matrix. Alternatively the impact copolymer polypropylene composition may comprise a propylene copolymer matrix. Alternatively the impact polypropylene composition may comprise a matrix which is a mixture of a propylene homopolymer and a propylene copolymer matrix.

When the impact copolymer propylene composition comprises a propylene copolymer matrix, the comonomer present is preferably one or more olefin (other than propylene) and more preferably one or more alpha-olefin. Particularly preferably the comonomer is selected from ethylene or C₄-C₈ alpha-olefin and mixtures thereof. Representative examples of preferred comonomers include ethylene, but-1-ene, pent-1-ene, hex-1-ene, hept-1-ene, oct-1-ene and mixtures thereof. Preferred comonomers include ethylene, but-1-ene, hex-1-ene and oct-1-ene. Ethylene is particularly preferred. Preferred propylene copolymers comprise 0.1-10 wt%, more preferably 0.3-5.0 wt% and still more preferably 0.3-3.0 wt% comonomer.

Preferably, however, the impact copolymer polypropylene composition comprises a propylene homopolymer matrix.

The propylene homopolymer or copolymer present in the matrix preferably has a tacticity of at least 94%. The tacticity affects the flexural modulus of the impact copolymer polypropylene composition and the final thin-wall injection molded article, e.g. packaging. Preferably the propylene homopolymer or copolymer present in the matrix has a tacticity of at least 95% and more preferably at least 96%. The tacticity of the propylene homopolymer or copolymer present in the matrix preferably has an upper limit of 98%.

The propylene homopolymer or copolymer present in the matrix preferably has a MFR₂ of 100-700 g/10 min, more preferably 120-500 g/10 min and still more preferably 140-500 g/10 min. This contributes to the overall processability of the composition.

Preferred impact copolymer polypropylene compositions of the present invention comprise 82-90 wt%, more preferably 83-90 wt%, still more preferably 83.5-90 wt%, yet more preferably 84-90 wt% and still more preferably 84.5-90 wt% of propylene homopolymer or copolymer matrix, based on the total weight of propylene homopolymer or copolymer matrix and ethylene propylene rubber phase.

Preferably the ethylene propylene rubber phase is present in the composition of the present invention in an amount of 10-17 wt%, more preferably 10-16.5 wt%, yet more preferably 10-16 wt% and still more preferably 10-15.5 wt%, based on the total weight of propylene homopolymer or copolymer matrix and ethylene propylene rubber phase.

The ethylene propylene rubber phase present in the composition of the present invention preferably consists essentially, e.g. consists of, repeat units derived from ethylene and propylene. If other repeat units (i.e. units from monomers other than ethylene or propylene) are present, they are preferably present in an amount of less than 1 mol% and still more preferably less than 0.5 mol%. Preferably the ratio of ethylene to propylene in the ethylene propylene rubber phase is 1:1 to 1.27:1 and more preferably 1.04:1 to 1.27:1.

Preferably the amount of ethylene in the ethylene propylene rubber (PER) phase (i.e. PER-C2) is 51-56 mol%, more preferably 51-55 mol%, and still more preferably 52-55 mol%. Correspondingly, preferably the amount of propylene in the ethylene propylene rubber (PER) phase is 44 to 50 mol%, more preferably 44-49 mol%, still more preferably 45 to 49 mol% and still more preferably 45 to 48 mol%.

The PER content of the impact copolymer propylene composition is believed to significantly affect its mechanical properties, especially the impact strength at both room temperature and at low temperatures (e.g. -20 °C). Without wishing to be bound by theory, it is thought that a high PER content gives high impact strength (at both room temperature and low temperatures) and low flexural modulus, while conversely a low PER content gives a low impact strength and high flexural modulus. The optimal PER content is thus one key factor that must be taken into account when seeking to optimize the impact strength and flexural modulus, including the impact strength at low temperature, when seeking to achieve an overall desirable balance of mechanical properties.

It is believed that the amount of ethylene monomer unit in the PER phase (PER-C2) also plays a significant role in determining the mechanical properties of the impact copolymer propylene composition and injection molded articles made therefrom. Without wishing to be bound by theory, it is thought that a high PER-C2 content provides a low glass temperature (T_{g}). However, if long chain block polyethylene is generated in PER, it will result in poor impact strength both at room and low temperature. The PER content and PER-C2 of the impact copolymer polypropylene composition of the present invention surprisingly provides a desirable balance of impact properties at low temperature as well as low Tg.

Preferred impact copolymer polypropylene compositions of the present invention have a total C2 content of 4-20 mol%, more preferably 4-15 mol% and still more preferably 5-10 mol%. This reflects the fact that the matrix is preferably a propylene homopolymer.

Preferably the amount of polyethylene homopolymer (as determined by NMR as described in the examples) present in the impact copolymer polypropylene composition of the present invention is < 3 mol%. More preferably the amount of polyethylene homopolymer is 0-2.5 mol% and more preferably 0-2.0 mol%. Still more preferably the impact copolymer polypropylene composition has 50-56 mol% ethylene in the ethylene propylene rubber (PER) phase (i.e. PER-C2) and 0-2.5 mol% ethylene homopolymer, more preferably 50-55 mol% ethylene in the ethylene propylene rubber (PER) phase (i.e. PER-C2) and 0-2.5 mol% ethylene homopolymer, and still more preferably 51-55 mol% ethylene in the ethylene propylene rubber (PER) phase (i.e. PER-C2) and 0-2.5 mol% ethylene homopolymer. This reflects the fact that the ethylene units are preferably well distributed in the ethylene propylene rubber phase.

Preferably the impact copolymer polypropylene composition has a high melt flow rate (MFR₂). This ensures it is suitable for thin wall injection molding applications, e.g. to prepare packaging. MFR₂ mainly depends on the molecular weight of the polymer. Longer chains of polymers tend to have lower MFR₂ compared to shorter chains.

Preferably the MFR₂ of the impact copolymer polypropylene composition is 60-300 g/10 min, as determined according to ASTM D1238-13 at 230 °C 2.16 kg. More preferably the MFR₂ of the impact copolymer polypropylene composition is 60-200 g/10 min and still more preferably 70-200 g/10 min.

The impact copolymer polypropylene composition of the present invention preferably has a flexural modulus of at least 12,500 kg/cm², as determined according to ASTM D790. At this range, it is suitable for various applications and especially in packaging e.g. frozen food packaging, which requires a certain mechanical strength to prevent damage during storage and transportation. The upper limit of the flexural modulus is preferably 16,000 kg/cm².

The impact copolymer polypropylene composition of the present invention preferably has an Izod impact strength at -20°C of at least 3.0 kg.cm/cm, as determined according to ASTM D256. Preferably the Izod impact strength at -20°C is 3-10 kg.cm/cm, more preferably 3.2-8.0 kg.cm/cm and still more preferably 3.3-6.0 kg.cm/cm, as determined according to ASTM D256.

The impact copolymer polypropylene composition of the present invention preferably has an Izod impact strength at 23 °C of at least 5.0 kg.cm/cm, as determined according to ASTM D256. Preferably the Izod impact strength at 23 °C is 5-15 kg.cm/cm, more preferably 5.5-12.0 kg.cm/cm and still more preferably 6.0-11.0 kg.cm/cm, as determined according to ASTM D256.

The impact copolymer polypropylene composition preferably has a glass transition temperature (T_{g}) of lower than -39 °C. This enables the composition to be used at low temperatures, especially for the frozen food industry. More preferably the impact copolymer polypropylene composition has a T_{g} of at least -40 °C. Preferably the impact copolymer polypropylene composition has a Tg of -40 to -55 °C and more preferably -40 to -50 °C.

Preferred impact copolymer polypropylene compositions of the present invention comprise at least two, more preferably three, still more preferably four and yet more preferably all of the following properties:
(i) MFR₂ of 60-200 g/10 min;
(ii) flexural modulus of at least 12,500 kg/cm²;
(iii) Izod impact strength at -20°C of at least 3.0 kg.cm/cm;
(iv) Izod impact strength at 23 °C of at least 5.0 kg.cm/cm; and
(v) a glass transition temperature (T_{g}) of lower than -39 °C.

The impact copolymer polypropylene composition may be prepared by any conventional methods known in the art. Preferably, however, the impact copolymer polypropylene composition is produced in a multistage process. Each stage may be carried out in the same reactor or in one or more separate reactors. The process may be continuous, semi-continuous or batch but is preferably a continuous process.

A preferred process for preparing the impact copolymer polypropylene composition of the present invention comprises (e.g. consists essentially of): (i) polymerising propylene and optionally an olefin comonomer to obtain the propylene homopolymer or copolymer matrix; and (ii) polymerising propylene and ethylene in the presence of the propylene homopolymer or copolymer matrix to obtain the ethylene propylene rubber phase dispersed in the propylene homopolymer or copolymer matrix.

In one preferred process, the propylene homopolymer or copolymer matrix and the ethylene propylene rubber phase is produced in the same reactor. In such a process, the polymerisation conditions are changed after the polymerisation of the propylene homopolymer or copolymer matrix is complete. Alternatively, and preferably, the propylene homopolymer or copolymer matrix may be produced in one or more reactors and then transferred to another reactor in which the ethylene propylene rubber phase is produced. Conventional reactors and polymerisation equipment may be used.

Optionally, the process may also comprise a pre-polymerisation step which precedes the first polymerisation step. Any pre-polymerisation step is carried out in a conventional manner.

The propylene homopolymer or copolymer matrix is preferably produced in a bulk polymerisation. Optionally the bulk polymerisation is carried out in several reactors, e.g. 1, 2 or 3 reactors. The conditions may be the same or different in each reactor. The ethylene propylene rubber phase is preferably produced in a gas phase polymerisation in the presence of the propylene homopolymer or copolymer. Again, the gas phase polymerisation may be carried out in one or more reactors, e.g. 1 or 2 reactors.

The polymerisation of the propylene homopolymer or copolymer matrix is preferably carried out at a temperature of 65-80 °C and more preferably about 70 °C. Preferably the polymerisation is carried out at a pressure of 0.1-4.5 MPa, more preferably 2.9-4.2 MPa and still more preferably 3.3-4.2 MPa. Preferably the polymerisation time is 5-240 minutes, more preferably 30-130 minutes and still more preferably 40-80 minutes.

The polymerisation of the ethylene propylene rubber phase is preferably carried out at a temperature of 65-80 and more preferably about 70 °C. Preferably the polymerisation is carried out at a pressure of 0.1-2.2 MPa, more preferably 1-1.6 MPa and still more preferably 1-1.3 MPa. Preferably a pre-mixed gas comprising hydrogen, ethylene and propylene is continuously fed into the reactor. Preferably the ratio of ethylene to propylene is 300 g:1 litre to 450 g:1 litre and more preferably 350 g:1 litre to 400 g:1 litre. Preferably the ratio of hydrogen to ethylene is 1:60 to 1:20 and more preferably 1:30 to 1:50. Preferably the ratio of hydrogen to propylene is 5 g:1 litre to 20 g:1 litre and more preferably 6 g:1 litre to 15 g:1 litre. Preferably the polymerisation time is 10-240 minutes, more preferably 20 to 120 minutes and still more preferably 30-50 minutes. Preferably the progress of the reaction is monitored using conventional means.

The reaction time for each stage of the polymerisation process is important as it partly determines the amount of matrix and ethylene propylene rubber phase present. Preferably the polymerisation time for the first stage is longer than the polymerisation time for the second stage. Preferably the progress of each of the polymerisation reactions is monitored using conventional means.

Preferably the impact copolymer polypropylene composition of the present invention is polymerised by a catalyst system comprising a Ziegler Natta catalyst. Thus preferably a Ziegler-Natta catalyst is used in both stages of the polymerisation. More preferably the same Ziegler-Natta catalyst is used in both stages.

Preferably the Ziegler-Natta catalyst comprises a titanium halide supported on a metal or metalloid compound, preferably MgCl₂. Preferably the solid catalyst comprises an amount of transition metal in the range of 0.1-5 mmol/g. Preferably the solid catalyst comprises an amount of Mg in the range of 1-25 wt% based on the weight of dry, solid catalyst.

Optionally the solid catalyst system further comprises one or more internal electron donors. Representative examples of suitable internal electron donors include amines, amides, ethers, esters, aromatic esters, ketones, nitriles, thioethers, thioesters, aldehydes, alcoholates, and salts of organic acids. A preferred internal electron donor comprises at least one organo-ester functional group and more preferably is a diester compound. Preferably the catalyst system further comprises an activator as a cocatalyst. Activators may be selected from alkyl aluminium and alkoxy aluminium compounds. Preferred activators are alkyl aluminium compounds e.g. trimethyl aluminium. The activator is preferably used in excess relative to the transition metal. For instance, when an alkyl aluminium is used as an activator, the molar ratio of the aluminium in the activator to the transition metal in the catalyst system is preferably from 1 to 500 mol/mol, and more preferably 2 to 100 mol/mol. The molar ratio of alkyl aluminum to titanium on the solid support (Al/Ti) is preferably in the range 10-400, and more preferably in the range 30-120.

The catalyst system comprising a Ziegler-Natta catalyst may additionally comprise co-activator and/or modifiers. Thus, for example, two or more alkyl aluminium compounds may be used and/or the catalyst system may be combined with the different types of internal donor e.g. ethers, ester etc. to modify the activity and/or selectivity of the catalyst system.

In preferred processes of the invention external donors are added to the polymerisation to modify the activity and/or selectivity of the polymerisation(s). Preferably an external donor is added to each stage of the polymerisation.

The external donors in the polymerisation of each of the propylene homopolymer or copolymer matrix and the ethylene propylene rubber phase may be the same or different. A preferred external donor in the polymerisation of the propylene homopolymer or copolymer matrix is an amino alkoxysilane compound. A preferred external donor in the polymerisation of the ethylene propylene rubber phase is a dialkoxy silane compound.

A preferred process for preparing an impact copolymer polypropylene composition of the present invention comprises:
(i) homopolymerising propylene using a Ziegler-Natta catalyst, alkyl aluminium as a co-catalyst, and an amino alkoxysilane compound of formula (I) as the first external electron donor

   [R¹R²N(R³)ₐ]ₓSi(OR⁴)₄₋ₓ (I)

   wherein x is 1 or 2, a is 0 or 1, R¹ and R² are independently C₁-C₅ aliphatic hydrocarbyl (e.g. C₁₋₅ alkyl) or C₃-C₆ cyclic hydrocarbyl (e.g. C₃₋₆ cycloalkyl), R³ is C₁-C₃ alkylene and R⁴ is C₁-C₂ aliphatic hydrocarbyl (e.g. C₁₋₂ alkyl);
(ii) copolymerising propylene and ethylene, in the presence of the polymer mixture obtained from step (i), using a Ziegler-Natta catalyst, alkyl aluminium as a co-catalyst, and a dialkoxy silane compound of formula (II) as a second external electron donor

   R⁵R⁶Si(OR⁷)₂ (II)

   wherein R⁵ and R⁶ are independently a C₁₋₆ aliphatic hydrocarbyl or C₃-C₆ cyclic hydrocarbyl (e.g. a C₃₋₆ cycloalkyl group), optionally containing 1 or 2 heteroatoms; and R⁷ is C₁-C₄ aliphatic hydrocarbyl (e.g. C₁₋₄ alkyl group).

In preferred processes, a in formula (I) is 0.

In other preferred processes, x is 1.

In other preferred processes, R⁴ is methyl or ethyl.

In other preferred processes, R¹ and R² are independently C₁₋₆ aliphatic hydrocarbyl. More preferably R¹ and R² are independently C₄₋₃ alkyl, more preferably C₁₋₂ alkyl, e.g. methyl or ethyl. Preferably R¹ and R² are the same.

In other preferred processes R⁵ and R⁶ are a C₃₋₆ cycloalkyl group selected from cyclobutyl, cyclopentyl and cyclohexyl. More preferably R⁵ and R⁶ are cyclopentyl or cyclohexyl. Preferably R⁵ and R⁶ are the same.

In other preferred processes R⁷ is C₁₋₃ alkyl, more preferably C₁₋₂ alkyl, e.g. methyl or ethyl.

Representative examples of external electron donors of formula (I) include amino trialkoxysilane.

Representative examples of external electron donors of formula (II) include dicycloalkyl dialkoxysilane.

In a particularly preferred process of the invention, the first electron donor is diethylamino-triethoxysilane. In another preferred process of the invention the second electron donor is dicyclopentyldimethoxysilane. In a further preferred process of the invention, the first electron donor is diethylamino-triethoxysilane and the second electron donor is dicyclopentyldimethoxysilane.

The impact copolymer polypropylene composition of the present invention optionally comprises modifiers and/or additives. These modifiers and/or additives may be included during the polymerisation process and/or after the polymerisation by melt mixing. Examples of suitable additives include, but are not limited to, stabilizers, lubricants, nucleating agents, pigments and foaming agents. Preferred compositions of the present invention comprise 0-1 wt% additives. Examples of suitable modifiers include fillers (e.g. talc, calcium carbonate) and thermoplastics. Preferred compositions of the invention comprise 0-10 wt% modifiers.

The impact copolymer polypropylene composition of the present invention is particularly well suited for use in injection molding, in particular thin-wall injection molding. Injection molding comprises injecting the molten impact copolymer polypropylene composition into a mold; solidifying the impact copolymer polypropylene in the mold and ejecting from the mold a molded impact copolymer polypropylene article. The article per se comprising the impact copolymer polypropylene composition forms a further aspect of the present invention. Preferred articles include containers and container tops/lids, and in particular containers and lids for food, especially frozen food. Particularly preferred articles include industrial containers, cold storage containers and packaging (e.g. food packaging and packaging in cold chain logistics). It will be appreciated that, although specific embodiments of the present invention have been described herein for the purposes of illustration, various modifications may be made without departing from the scope of the disclosure. Accordingly, the disclosure is not limited except as by the appended claims.

In the following section, further advantages and features of the present invention are illustrated by way of examples together with Figures, wherein:

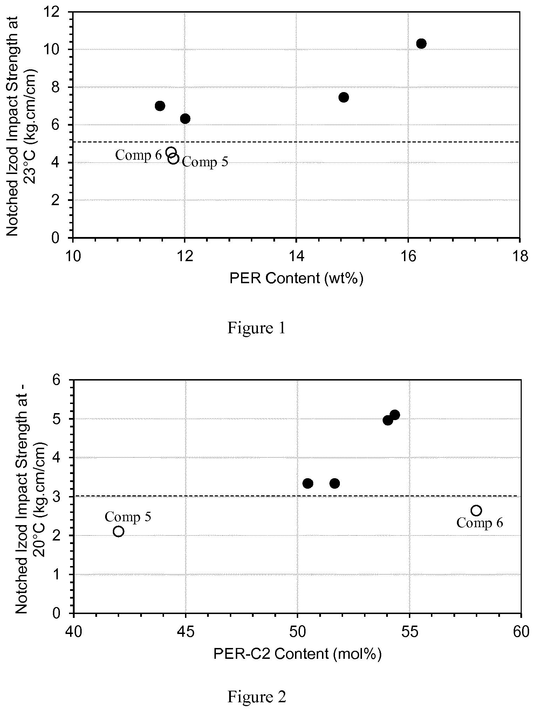

Figure 1 illustrates the relationship between PER content versus Notched Izod Impact Strength at 23 °C;
Figure 2 illustrates the relationship between PER-C2 content versus Notched Izod Impact Strength at -20 °C; and

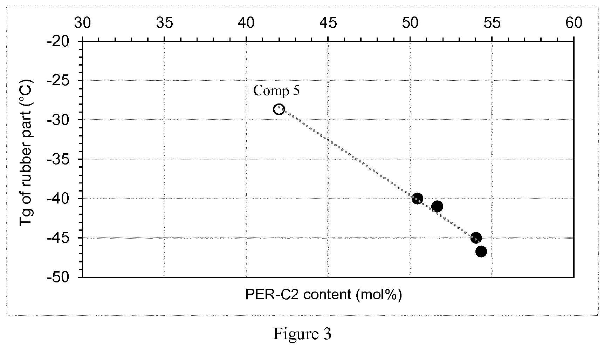

Figure 3 illustrates the relationship between PER-C2 content versus Tg.

### Measurement methods

The following describes the property testing of the impact copolymer polypropylene composition of the present invention. The test methods and equipment employed are conventionally used and are not intended to limit the scope of the invention.

Melt flow rate (MFR₂) was determined according to ASTM D1238-13 at 230°C 2.16 kg.

PER content (wt%), PER-C2 content (mol%), total C2 in ICP (mol%) and PE homopolymer in ICP (mol%) were measured by ¹³C-NMR spectroscopy using a Bruker Ascend 500 NMR spectrometer, with a ¹³C resonance frequency of 100.4 MHz. The sample was prepared in 1, 2, 4-trichlorobenzene with 1, 1, 2, 2-tetrachloroethane (*d₂*) and measured at 120°C. The integral of each peak position was used together with first order of Markovian Statistics and Simplex Algorithm as described by H. N. Cheng. (J. Anal. Chem. 54, 1828 -1833, 1982).

Glass transition temperature (T_{g}) was measured using DMA Q800 with frequency 1 Hz, amplitude of 20 µm and a ramp rate of 3°C/min running from -80°C to 70°C.

Flexural modulus was determined by ASTM D790.

Notched Izod Impact strength was evaluated by ASTM D256 at both 23°C and -20°C.

### EXAMPLES

All starting materials were commercially available.

### Preparation of the impact copolymer polypropylene composition

### Example 1

A commercially available Ziegler-Natta catalyst (Ziegler-Natta Polypropylene MgCl₂ based supported catalyst, 7 mg) was pre-contacted with 1 ml of 15%w/w triethyl aluminum, 0.4 ml of 250 mM diethyl-amino triethoxy silane, and 2 ml of hexane at room temperature for 3 minutes. The mixture was then injected into a polymerisation reactor, which was filled with 450 gram of liquid propylene, and 50 normal litter of hydrogen without other inert gas at 25°C, and held at this temperature for 10 minute with a stirring speed of 200 rpm. The polymerisation temperature was then increased to 70°C within 3 minutes, maintaining a stirring speed of 200 rpm, and the temperature was held for 40 minutes. On the 39^{th} minute a mixture of 1.5 ml of 15 %w/w triethyl aluminum and 0.3 ml of 250 mM dicyclopentyl dimethoxy silane was injected into the reactor. On the 40^{th} minute the agitator was stopped and the reactor was depressurized down to atmospheric pressure, keeping the reactor temperature at 50°C. The reactor vessel was then pressurized with a premixed gas of hydrogen/ethylene/propylene up to a polymerisation pressure of 1.2 MPa at 70°C within 1 minute with stirring at 200 rpm. The polymerisation vessel was fed a gas composition of hydrogen/ethylene/propylene at 69/2210/5.4 ml/minute for 25 minutes. The reaction was stopped by depressurizing the reactor vessel to atmospheric pressure.

### Example 2

The same catalyst composition and homopolymerisation conditions as in Example 1 were used, except that 60 normal liter hydrogen was employed. On the 39^{th} minute of homopolymerisation, a mixture of 1.5 ml 15%w/w triethyl aluminum, and 0.4 ml of 250 mM dicyclopentyl dimethoxy silane was added as in Example 1. The co-polymerisation conditions were the same as in Example 1, except that the gas composition was hydrogen/ethylene/propylene at 53/1600/4.5 ml/ minute and the polymerisation time was 20 minutes.

### Example 3

The same catalyst composition and homopolymerisation conditions as in Example 1 were used. On the 39^{th} minute of homopolymerisation, a mixture of 1.5 ml 15%w/w triethyl aluminum, and 0.5 ml of 250 mM dicyclopentyl dimethoxy silane was added as in Example 1. The co-polymerisation conditions were the same as in Example 1, except that the gas composition was hydrogen/ethylene/propylene at 59/1600/4.5 ml/minute and the polymerisation time was 25 minutes.

### Example 4

The same catalyst composition and homopolymerisation conditions as in Example 1 were used. On the 39^{th} minute of homopolymerisation, a mixture of 1.5 ml 15%w/w triethyl aluminum, and 0.5 ml of 250 mM dicyclopentyl dimethoxy silane was added as in Example 1. The co-polymerisation conditions were the same as in Example 1, except that the gas composition was hydrogen/ethylene/propylene at 69/2210/5.4 ml/minute and the polymerisation time was 30 minutes.

### Comparative examples 5 and 6

Comparative impact copolymer polypropylene compositions were prepared. Comparative example 5 has a PER-C2 content which is lower than the examples (1-4) of the present invention and comparative example 6 has a PER-C2 content which is higher than the examples (1-4) of the present invention.

After each of the polymerisations the polymers were pelletized. A standard antioxidant and process stabilizer mix was added. The polymer pellets were extruded via a twin screw extruder. The polymer pellets were dried in an oven under a nitrogen atmosphere and were then analyzed as described above. The results are shown in Table 1.

**Table 1 The properties of Example 1-4 and comparative example 5-6.**

| | | Ex 1 | Ex 2 | Ex 3 | Ex 4 | Comp 5 | Comp 6 |
|---|---|---|---|---|---|---|---|
| MFR₂ | g/ 10 min | 82 | 95 | 78 | 100 | 119 | 105.1 |
| PER content | wt % | 11.56 | 12.01 | 14.85 | 16.24 | 11.8 | 11.76 |
| PER-C2 content | mol % | 54.04 | 51.66 | 50.46 | 54.35 | 42 | 57.99 |
| Total C2 in ICP | mol % | 7.08 | 5.77 | 7.6 | 9.86 | 4.5 | 8.98 |
| PE homopolymer by NMR | mol % | 1.96 | 1.34 | 1.59 | 2.23 | 1 | 3.35 |
| Tg of rubber (DMA) | °C | -45 | -41 | -40 | -47 | -29 | -49.5 |
| Flexural modulus | kg/cm² | 13984 | 14352 | 13000 | 12509 | 13643 | 13761 |
| Izod impact strength at 23 °C | Kg.cm/cm | 7 | 6.02 | 7.46 | 10.3 | 4.2 | 4.53 |
| Izod impact strength at -20°C | Kg.cm/cm | 4.96 | 3.34 | 3.34 | 5.1 | 2.1 | 2.64 |

The examples 1-4 of the present invention show a better balance of mechanical properties, specifically flexural modulus and Izod impact strength at 23°C and -20 °C compared to the comparative examples. The flexural modulus of all of the examples is approximately 12,000-14,000 kg/cm² but the Izod impact strength, particularly at -20°C of examples 1-4 is significantly better than that of both comparative examples. Additionally each of the examples of the present invention has a Tg of below -39 °C.

## Claims

1. An impact copolymer polypropylene composition comprising a propylene homopolymer or copolymer matrix and an ethylene propylene rubber phase dispersed in the matrix, wherein the ethylene propylene rubber phase (PER) is present in an amount of 10-18 wt%, based on the total weight of the propylene homopolymer or copolymer matrix and the ethylene propylene rubber phase, and the amount of ethylene in the ethylene propylene rubber (PER-C2) phase is 50-56 mol%.

2. The impact copolymer polypropylene composition according to claim 1 wherein the amount of ethylene in the ethylene propylene rubber (PER-C2) phase is 51-56 mol%.

3. The impact copolymer polypropylene composition according to claim 1 or 2 wherein the ethylene propylene rubber phase (PER) is present in an amount of 10-15.5 wt%.

4. The impact copolymer polypropylene composition according to any preceding claim wherein said composition has a MFR₂ of 60-300 g/10 min.

5. The impact copolymer polypropylene composition according to any preceding claim wherein said composition has a glass transition temperature (T_{g}) of lower than -39 °C.

6. The impact copolymer polypropylene composition according to any preceding claim wherein said composition has a flexural modulus of at least 12500 kg/cm², as determined according to ASTM D790, and an Izod impact strength at -20°C of at least 3 kg.cm/cm, as determined according to ASTM D256.

7. A process for preparing an impact copolymer polypropylene composition as claimed in any one of claims 1 to 6, comprising:
(i) polymerising propylene and optionally an olefin comonomer to obtain the propylene homopolymer or copolymer matrix; and
(ii) polymerising propylene and ethylene in the presence of the propylene homopolymer or copolymer matrix to obtain the ethylene propylene rubber phase dispersed in the propylene homopolymer or copolymer matrix.

8. A process for preparing an impact copolymer polypropylene composition as claimed in any one of claims 1 to 6, wherein the process comprises:
(i) homopolymerising propylene using a Ziegler-Natta catalyst, alkyl aluminium as a co-catalyst, and an amino alkoxysilane compound of formula (I) as a first external electron donor
[R¹R²N(R³)ₐ]ₓSi(OR⁴)₄₋ₓ (I)
wherein x is 1 or 2, a is 0 or 1, R¹ and R² are independently C₁-C₅ aliphatic hydrocarbyl or C₃-C₆ cyclic hydrocarbyl, R³ is C₁-C₃ alkylene and R⁴ is C₁-C₂ aliphatic hydrocarbyl;
(ii) copolymerising propylene and ethylene, in the presence of the polymer mixture obtained from step (i), using a Ziegler-Natta catalyst, alkyl aluminium as a co-catalyst, and a dialkoxy silane compound of formula (II) as a second external electron donor
R⁵R⁶Si(OR⁷)₂ (II)
wherein R⁵ and R⁶ are independently a C₁₋₆ aliphatic hydrocarbyl or C₃₋₆ cyclic hydrocarbyl, optionally containing 1 or 2 heteroatoms; and R⁷ is C₁-C₄ aliphatic hydrocarbyl.

9. The process according to claim 8 wherein the first election donor is diethylamino-triethoxy-silane and the second electron donor is dicyclopentyldimethoxysilane.

10. The impact copolymer polypropylene composition obtainable by the process of any one of claims 7 to 9.

11. Use of the impact copolymer polypropylene composition according to any one of claims 1 to 6 or 10 in injection molding.

12. Use as claimed in claim 11 wherein said injection molding is thin-wall injection molding.

13. A method of injection molding comprising injecting a molten impact copolymer polypropylene composition as claimed in any one of claims 1 to 6 or 10 into a mold; solidifying the impact copolymer polypropylene in the mold and ejecting from the mold a molded impact copolymer polypropylene article.

14. A molded article comprising the impact copolymer polypropylene composition according to any one of claims 1 to 6 or 10.

15. A molded article as claimed in claim 14 which is an industrial container, cold storage container or packaging (e.g. food packaging or packaging in cold chain logistics).
